# EUROPÄISCHE PATENTANMELDUNG

(11) **EP 2 145 764 A2**
(43) Veröffentlichungstag der Anmeldung: **20.01.2010**
(21) Anmeldenummer: 09008834.5
(22) Anmeldetag: 07.07.2009
(51) Int. Cl.: B32B 41/00, B32B 17/10

(54) **Verfahren und Anlage zum Herstellen von Verbundwekstücken aus miteinander laminierten Schichten**

(30) Priorität: 17.07.2008 DE 102008033631
(71) Anmelder: Robert Bürkle GmbH, 72250 Freudenstadt (DE)
(72) Erfinder: Damm, Norbert, 76689 Karlsdorf-Neuthard (DE); Pojtinger, Michael, 72270 Baiersbronn (DE); Züfle, Matthias, 72270 Baiersbronn (DE); Dölker, Gerhard, 72270 Baiersbronn (DE); Renz, Wolfgang, 72250 Freudenstadt (DE)
(74) Vertreter: Lemcke, Brommer & Partner

(57) **Zusammenfassung**

Die Erfindung betrifft ein Verfahren sowie eine Anlage zum Herstellen von Verbundwerkstücken aus miteinander laminierten Schichten, von denen mindestens eine Schicht eine Glasplatte ist. Es wird zunächst mindestens ein Verbundwerkstück (14) in einer Laminierpresse (1) unter Druck- und Wärmeeinwirkung laminiert, um den zum Laminieren verwendeten Adhäsivstoff zumindest zu aktivieren. Dann wird das Verbundwerkstück aus der Laminierpresse in eine Aushärtestation und/oder Kühlstation (2) zum Aushärten und/oder Kühlen gefördert. Die Erfindung zeichnet sich dadurch aus, dass zwischen der Laminierpresse (1) und der Aushärtestation oder zwischen der Laminierpresse und der Kühlstation (2) eine Prüfeinrichtung (11,12) zum Erkennen von Glasbrüchen im Verbundwerkstück angeordnet ist, die etwa vorhandenen Glasbruch mittels einer Prüfung der Eigenstabilität des Verbundwerkstücks (14) feststellt.

## Beschreibung

Die Erfindung betrifft ein Verfahren und eine Anlage zum Herstellen von Verbundwerkstücken aus miteinander laminierten Schichten, von denen mindestens eine Schicht eine Glasplatte ist, nach den Oberbegriffen der Ansprüche 1 und 9.

Hauptanwendungsgebiet der vorliegenden Erfindung ist das Laminieren von Photovoltaik-Modulen, in denen eine flächige Solarzellenanordnung frontseitig von einer Glasplatte abgedeckt und mittels einer rückseitigen Folie oder ähnlichem wetterfest und vor allem feuchtigkeitsdicht eingekapselt wird. Des Weiteren ist mindestens eine Kleberschicht mit einem thermoreaktiven Adhäsivstoff enthalten, der durch Wärmeinwirkung aktiviert wird.

Eine Anlage der vorliegenden Art umfasst eine Laminierpresse zum Laminieren der Verbundwerkstücke unter Druck- und Wärmeeinwirkung sowie mindestens eine der Laminierpresse nachgeschaltete Aushärtestation und/oder mindestens eine Kühlstation zum Aushärten und/oder Kühlen der Verbundwerkstücke. Sowohl die Aushärtestation - soweit eine solche vorhanden ist - als auch die Kühlstation sind üblicherweise als Pressen mit Heiz- bzw. Kühlplatten ausgestaltet.

Ein Beispiel für eine Laminierpresse, wie sie bei einem Verfahren und einer Anlage der vorliegenden Art verwendet werden kann, ist aus der WO 2006/128699 A2 bekannt. Dort ist über einer Heizplatte ein auf- und abbewegbares Oberteil mit einem Dichtrahmen angeordnet, welcher eine Vakuumkammer umschreibt. Beim Schließen der Presse fährt das Oberteil auf die Heizplatte, und der Dichtrahmen wird dicht auf die Heizplatte aufgelegt, so dass die Vakuumkammer evakuiert werden kann. Über den Dichtrahmen ist eine flexible Membran gespannt, welche die Vakuumkammer abschließt und als Andrückmittel dient, um den für die Laminierung eines auf der Heizplatte angeordneten Werkstücks erforderlichen Druck gegen die Heizplatte aufzubringen. Hierfür wird das bei geschlossener Presse unter der Membran, zwischen dieser und der Heizplatte liegende Volumen evakuiert, so dass sich die Membran eng an das Werkstück anlegt.

Die Membran bringt also aufgrund des Evakuierens des darunterliegenden Volumens den notwendigen Druck für den Laminiervorgang auf das Werkstück auf, während gleichzeitig das Evakuieren der Werkstückumgebung dafür sorgt, dass sich im Werkstück beim Erwärmen desselben keine Blasen bilden oder diese herausgezogen werden. Dementsprechend kann der Laminiervorgang in der Laminierpresse vollständig durchgeführt werden, so dass anschließend nur noch eine Kühlstation durchlaufen werden muss; es ist jedoch auch möglich, den Laminiervorgang in der Laminierpresse lediglich bis zur Aktivierung des Adhäsivstoffs in der Kleberschicht unter Vakuum durchzuführen, die Laminierpresse dann zu öffnen und das Werkstück in einer nachfolgenden Aushärtestation unter Normaldruck weiter thermisch zu behandeln.

Wenn nun Photovoltaikmodule, oder sonstige Verbundwerkstücke mit Glasplatten, in einer Laminierpresse mit einem Andrückmittel laminiert werden, kommt es immer wieder einmal vor, dass die Glasplatte (oder gegebenenfalls mindestens eine von mehreren Glasplatten) zerbricht. Zwar hängen die Scherben der zerbrochenen Glasplatte wegen des Laminiervorgangs an der Kleberschicht mit dem aktivierten Adhäsivstoff, jedoch ist es dennoch nicht nur möglich, sondern kommt regelmäßig vor, dass Scherben oder Splitter abfallen und in den nachfolgenden Prozessschritten, also insbesondere in der Aushärtestation und/oder der Kühlstation große Probleme verursachen, insbesondere weitere Verbundwerkstücke beim Aushärten bzw. Kühlen beschädigen.

Ausgehend von diesem Stand der Technik liegt der vorliegenden Erfindung daher die Aufgabe zugrunde, ein Verfahren und eine Anlage der eingangs genannten Art vorzuschlagen, mit denen auf einen Glasbruch beim Laminiervorgang angemessen reagiert wird, um die Gefahr von Folgeschäden zu verringern.

Gelöst ist diese Aufgabe durch eine Anlage mit den Merkmalen des Anspruchs 1 sowie durch ein Verfahren mit den Merkmalen des Anspruchs 9. Bevorzugte Ausgestaltungen der erfindungsgemäßen Anlage finden sich in den Ansprüchen 2 bis 8; vorteilhafte Weiterbildungen des erfindungsgemäßen Verfahrens sind in den Ansprüchen 10 bis 16 niedergelegt.

Gemäß der vorliegenden Erfindung wird also zwischen der Laminierpresse und der Aushärtestation, oder, soweit eine Aushärtestation nicht vorhanden ist, zwischen der Laminierpresse und der Kühlstation eine Prüfeinrichtung zum Erkennen von Glasbrüchen im Verbundwerkstück angeordnet, die vorzugsweise eine Durchbiegung des Verbundwerkstücks hervorruft und detektiert. Die Erfindung macht sich also die Tatsache zunutze, dass eine zerbrochene Glasplatte weniger Eigenstabilität aufweist als eine intakte Glasplatte, was sich wiederum auf die Eigenstabilität des gesamten Verbundwerkstücks auswirkt. Wenn man nun insbesondere eine Durchbiegung des Verbundwerkstücks hervorruft, beispielsweise indem man das Werkstück an seinen Ecken oder in der Mitte anhebt oder in einer sonstigen Weise mit einer nicht-flächig auf das Werkstück einwirkenden Kraft beaufschlagt, so wird diese Durchbiegung um so stärker ausfallen, je kleiner die Eigenstabilität des Verbundwerkstücks ist. Ein Verbundwerkstück mit intakter Glasplatte wird eine signifikant höhere Eigenstabilität und somit eine signifikant kleinere Durchbiegung aufweisen als ein Verbundwerkstück mit einer oder gar mehreren gebrochenen Glasplatten.

Erfindungsgemäß erfolgt die Prüfung der Verbundwerkstücke auf Glasbruch mittels Detektierens der Eigenstabilität der Verbundwerkstücke im Bereich des Auslaufs der Laminierpresse, also im Förderweg zwischen der Laminierpresse und der nachfolgenden Bearbeitungsstation, und somit an einem Ort, an dem durch abfallende Glassplitter oder Scherben noch kein allzu großer Schaden hervorgerufen werden kann. Besonders wichtig ist dies, wenn die Laminierpresse und die nachfolgenden Bearbeitungsstationen jeweils mehretagig ausgebildet sind, um eine möglichst hohe Flächenkapazität bei der Fertigung von insbesondere Photovoltaikmodulen zu erhalten. Denn wenn in einer der oberen Etagen eine Glasplatte bricht, können Glassplitter und Scherben in den nachfolgenden Bearbeitungsstationen jeweils in eine Vielzahl von Pressenetagen gelangen und so einen um ein Vielfaches höheren Schaden verursachen.

Vorzugsweise wird das Verbundwerkstück zum Zweck einer Erkennung eines Glasbruchs so durchgebogen, dass die Glasplatte bei der Durchbiegung gestreckt wird. Sie sollte also auf der konvexen Seite des durchgebogenen Werkstücks angeordnet sein und jedenfalls an der Außenseite der neutralen Faser im durchgebogenen Verbundwerkstück. Denn wenn die Glasplatte auf der konkaven Seite dieser neutralen Faser liegt, würde sie beim Durchbiegen gestaucht. Bei den meisten Arten eines Glasbruchs liegen die Scherben jedoch noch plattenförmig aneinander, so dass sie durchaus noch eine Druckfestigkeit aufweisen, jedoch keine Zugfestigkeit mehr. Die Glasplatte sollte sich beim Durchbiegen des Verbundwerkstücks mithin auf der Seite befinden, die auf Zug beansprucht wird, und nicht auf derjenigen Seite, die auf Druck beansprucht wird.

Bei einem Photovoltaikmodul mit nur einer Glasplatte als Deckschicht wird dies so aussehen, dass das Modul derart durchgebogen wird, dass die Glasplatte sich im Wesentlichen konvex wölbt.

Es sei an dieser Stelle angemerkt, dass die Durchbiegung des Verbundwerkstücks zum Zweck einer Erkennung von Glasbruch selbstverständlich nicht konvex bzw. konkav im Wortsinne erfolgen muss; es sind vielmehr auch andere, unregelmäßige Durchbiegungen sowie zweidimensionale, also im Wesentlichen zylindrische Durchbiegungen denkbar, die im Rahmen der vorliegenden Erfindung liegen.

Weiter bevorzugt ist eine Detektionseinrichtung vorhanden, welche die Durchbiegung des Verbundwerkstücks optisch, beispielsweise mittels einer Kamera oder einer Lasermessvorrichtung, oder mechanisch, beispielsweise durch eine Biegewiderstandsmessung detektiert. Die von dieser Detektionseinrichtung aufgenommenen Messwerte können dann ausgewertet und zur Erkennung eines Glasbruchs verwendet werden.

Die Durchbiegung des Verbundwerkstücks kann insbesondere durch eine nach oben anhebbare Tastrolle oder einen solchen Tastgleiter hervorgerufen werden, die bzw. der das darüber hinweg geförderte Verbundwerkstück vorzugsweise im Bereich von dessen seitlichem Rand anhebt bzw. anzuheben versucht. Denn wenn das Anheben der Tastrolle oder des Tastgleiters mit einer Kraft erfolgt, die deutlich geringer als die Gewichtskraft des Verbundwerkstücks ist, wird die Tastrolle bzw. der Tastgleiter nur dann nach oben angehoben werden können, wenn das Verbundwerkstück sich leicht durchbiegen lässt. Dies ist jedoch nur dann der Fall, wenn ein Glasbruch vorhanden ist. Solange das Verbundwerkstück unversehrte Glasplatten enthält, ist die Durchbiegung so gering, dass die Gewichtskraft des Verbundwerkstücks ein Anheben der Tastrolle oder des Tastgleiters verhindert. Nur dann, wenn Glasbruch vorhanden ist, wird die Tastrolle bzw. der Tastgleiter das Verbundwerkstück lokal anheben können. Wenn die Tastrolle bzw. der Tastgleiter also mit einer Detektionseinrichtung versehen wird, die ein Anheben trotz aufliegendem Verbundwerkstück detektiert, kann ein Verbundwerkstück mit Glasbruch auf diese Art und Weise zuverlässig erkannt werden.

Zweckmäßigerweise ist die erfindungsgemäße Prüfeinrichtung, die einem Glasbruch über die Eigenstabilität des Verbundwerkstücks erkennt, mit einer Ausschleuseinrichtung gekoppelt, welche Verbundwerkstücke mit erkanntem Glasbruch an Ort und Stelle aus der Prozesslinie ausschleust. Ein Stop der Anlage aufgrund Glasbruchs kann hierdurch vermieden werden.

Soweit eine solche Ausschleuseinrichtung vorhanden ist, ist es vorteilhaft, wenn sie einen erfolgten Ausschleusvorgang an eine Anlagensteuerung meldet, so dass diese beim weiteren Prozessieren der Verbundwerkstücke in der Prozesslinie die entstandene Lücke berücksichtigen kann. Dies ist insbesondere dann notwendig, wenn jeweils mehrere Verbundwerkstücke zusammen in der Laminierpresse laminiert, zusammen in die weiteren Bearbeitungsstationen gefördert und dort zusammen weiterprozessiert werden, denn aufgrund der Zerbrechlichkeit der mit Glasplatten versehenen Verbundwerkstücke müssen diese in den verwendeten Pressen normalerweise zentrisch ausgerichtet werden.

Ein Ausführungsbeispiel für eine erfindungsgemäße Anlage wird im folgenden Anhand der beigefügten Zeichnungen näher beschrieben und erläutert. Es zeigen:
- Figur 1: eine schematische seitliche Ansicht eines Ausführungsbeispiels einer erfindungsgemäßen Anlage;
- Figur 2: ein Detail aus Figur 1;
- Figur 3: eine Draufsicht auf die Anlage aus Figur 1;
- Figur 4: eine Frontansicht des Details aus Figur 2.

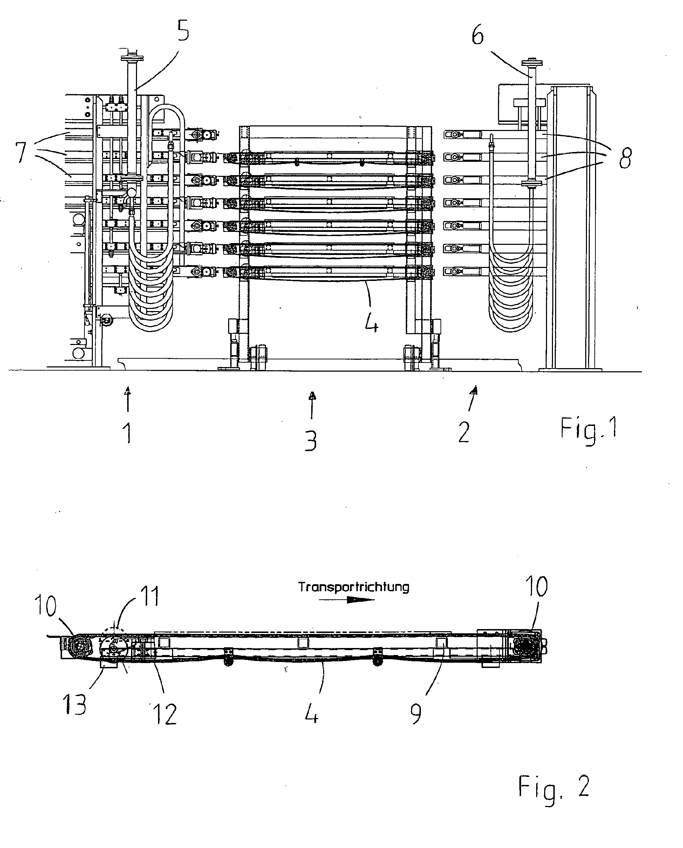

Die in Figur 1 gezeigte Anlage besteht aus einer Laminierpresse 1 mit sechs Etagen, einer als mehretagige Presse ausgebildeten Kühlstation 2 und einer Transporteinrichtung 3 zum Überführen von Verbundwerkstücken, die in der Laminierpresse 1 laminiert worden sind, in die Kühlstation 2. Sowohl die Laminierpresse 1 als auch die Kühlstation 2 und die Transporteinrichtung 3 umfassen sechs Etagen und ebenso viele umlaufende Förderbänder 4. Die Laminierpresse 1 ist mit einer Heizeinrichtung 5 zum Beschicken der einzelnen Pressenetagen mit heißem Thermoöl versehen, während die Kühlstation 2 eine Kühleinrichtung 6 zum Einleiten von Kühlflüssigkeit in die einzelnen Pressenetagen aufweist. Sowohl die Laminierpresse 1 als auch die Kühlstation 2 umfassen jeweils sieben Heizplatten 7 bzw. Kühlplatten 8, die zum Laminieren bzw. Kühlen zusammengefahren werden können, um die einzelnen Pressenetagen zu schließen. Die Transporteinrichtung 3 ist demgegenüber nicht zusammenfahrbar ausgestaltet, da sie lediglich die Aufgabe hat, die Verbundwerkstücke von der Laminierpresse 1 in die Kühlstation 2 zu überführen, jedoch nicht, die Verbundwerkstücke zu pressen.

Figur 2 zeigt eine Etage der Transporteinrichtung 3, beispielsweise die oberste, im Detail. Das um ein Gerüst 9 und zwei Umlenkrollen 10 umlaufende Förderband 4 ist schmaler ausgebildet, als die darauf zu überführenden Verbundwerkstücke. Seitlich neben dem Förderband 4, in der vorliegenden Darstellung also hinter dem Förderband 4 sichtbar, ist eine Tastrolle 11 angeordnet, die, wie mit durchbrochenen Linien angedeutet, mit einer bestimmten, nach oben wirkenden Kraft angehoben werden kann. Eine Detektionseinrichtung 12 detektiert das Anheben der Tastrolle 11, das über einen Pneumatikzylinder 13 hervorgerufen wird. Die Tastrolle 11 wird jeweils dann aktiviert, wenn ein Verbundwerkstück auf dem Förderband 4 aufliegend darüber hinweg transportiert wird, wodurch die Tastrolle 11 versucht, das Verbundwerkstück lokal anzuheben. Ist die Glasplatte des Verbundwerkstücks unversehrt, besitzt das Verbundwerkstück eine so hohe Eigenstabilität, dass ein großer Teil der Gewichtskraft des Verbundwerkstücks auf die Tastrolle 11 einwirkt und verhindert, dass diese angehoben wird. Liegt allerdings ein Glasbruch vor, ist die Eigenstabilität des Verbundwerkstücks deutlich geringer, wodurch die Tastrolle 11 es schafft, eine Durchbiegung des Verbundwerkstücks in einem größeren Maße hervorzurufen, so dass die Tastrolle 11 nach oben fährt und das Verbundwerkstück lokal anhebt. Die Detektionseinrichtung 12 erkennt, dass die Tastrolle 11 nach oben verfahren ist und meldet das Vorhandensein eines Glasbruchs.

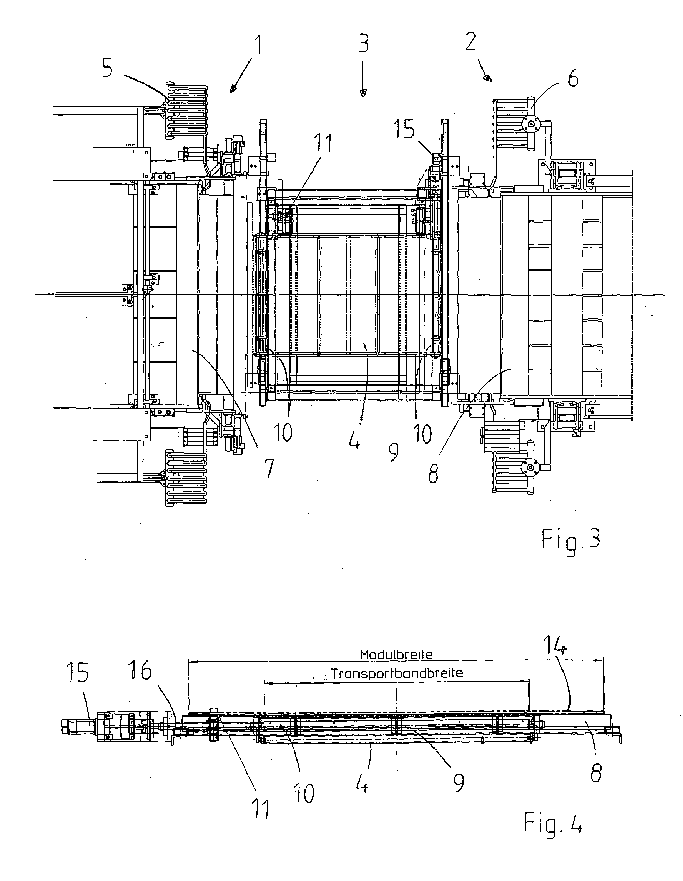

Figur 3 zeigt in einer Draufsicht die in Figur 1 gezeigte Anlage, so dass auch die in Figur 2 dargestellte oberste Etage der Transporteinrichtung 3 in Draufsicht zu erkennen ist. Hier wird deutlich, dass das Förderband 4 schmaler ausgebildet ist, als die Heizplatten 7 bzw. Kühlplatten 8 der Laminierpresse 1 bzw. der Kühlstation 2. Das Förderband 4 ist auch schmaler als die in der Laminierpresse 1 und der Kühlstation 2 prozessierten, hier nicht dargestellten Verbundwerkstücke, so dass diese rechts und links neben dem Förderband 4 überstehen. Direkt nach dem Auslauf der Laminierpresse 1, in Transportrichtung gesehen links neben dem Förderband 4 ist die Tastrolle 11 angeordnet, so dass diese nahe des Randes eines darüber hinweg geförderten Verbundwerkstücks auf dieses einwirkt und versucht, dieses nicht-flächig, nämlich randseitig anzuheben. Wie bereits erwähnt, wird die Tastrolle 11 nur mit einer Kraft angehoben, die deutlich geringer ist, als die Gewichtskraft des Verbundwerkstücks, so dass dieses nicht angehoben werden kann, wenn die darin befindliche Glasplatte noch unversehrt ist und eine entsprechende Eigenstabilität aufweist.

Figur 4 zeigt wiederum die oberste Etage der Transporteinrichtung 3 im Detail, diesmal jedoch in einer Frontansicht, also von der Laminierpresse 1 her gesehen. Hier wird deutlich, dass das Gerüst 9 mit dem umlaufenden Förderband 4 schmaler ausgebildet ist, als ein hier dargestelltes, aufliegendes Verbundwerkstück 14 sowie die hier noch sichtbare, hinter der Transporteinrichtung 3 liegende Kühlplatte 8 der dahinter angeordneten Kühlstation 2. Dementsprechend ist ein Motor 15 zum Antrieb des Förderbands 4 über eine verlängerte Antriebswelle 16 mit der Umlenkrolle 10 verbunden.

Gut sichtbar ist in Figur 4, dass die Tastrolle 11 deutlich abgesetzt neben dem Förderband 4 angeordnet ist und lediglich auf einen Randbereich des Verbundwerkstücks 14 einwirkt. Das Verbundwerkstück 14 besteht im vorliegenden Ausführungsbeispiel im Übrigen aus einer Glasplatte, einer Solarzellenschicht und einer auflaminierten Rückseitenfolie, wobei die Glasplatte in der Laminierpresse 1, und somit auch in der Transporteinrichtung 3 und der Kühlstation 2 unten liegend angeordnet ist. Die Tastrolle 11 verursacht also eine Durchbiegung des Verbundwerkstücks 14, bei der die Glasplatte gestreckt und nicht gestaucht wird. Solange die Glasplatte unversehrt ist, wird die Durchbiegung so gering bleiben, dass die Tastrolle 11 sehr schnell gegen einen Großteil der Gewichtskraft des Verbundwerkstücks 14 drückt, so dass erfindungsgemäß die auf die Tastrolle einwirkende Anhebekraft nicht ausreicht, um die Tastrolle 11 in ihre obere Position zu verlagern. Lediglich dann, wenn die Glasplatte gebrochen ist, kann das Verbundwerkstück 14 so leicht durchgebogen werden, dass sich die Tastrolle 11 ganz anheben kann, ohne dass ein Großteil des Verbundwerkstücks 14 angehoben wird; denn dies kann sich wegen der gebrochenen Glasplatte leicht durchbiegen.

Abschließend sei bemerkt, dass das erfinderische Prinzip, einen Glasbruch mittels einer Prüfung der Eigenstabilität des Verbundwerkstücks festzustellen, unabhängig von der konkreten Umsetzung dieses Prinzips ist und insbesondere auch davon unabhängig ist, wo die Prüfung der Eigenstabilität erfolgt, und ob die Anlage, in der das erfinderische Prinzip umgesetzt wird, außer einer Laminierpresse auch eine Aushärtestation und/oder eine Kühlstation umfasst.

## Patentansprüche

1. Anlage zum Herstellen von Verbundwerkstücken aus miteinander laminierten Schichten, von denen mindestens eine Schicht eine Glasplatte ist, umfassend mindestens eine Laminierpresse (1) zum Laminieren der Verbundwerkstücke (14) unter Druck- und Wärmeinwirkung sowie mindestens eine der Laminierpresse (1) nachgeschaltete Aushärtestation und/oder mindestens eine Kühlstation (2) zum Aushärten und/oder Kühlen der Verbundwerkstücke (14), wobei eine Transporteinrichtung (3) zum Überführen der Verbundwerkstücke (14) von der Laminierpresse (1) zur Aushärtestation und/oder Kühlstation (2) vorhanden ist,
**dadurch gekennzeichnet,**
**dass** zwischen der Laminierpresse (1) und der Aushärtestation oder zwischen der Laminierpresse (1) und der Kühlstation (2) eine Prüfeinrichtung (11, 12) zum Erkennen von Glasbrüchen im Verbundwerkstück (14) angeordnet ist.

2. Anlage nach Anspruch 1,
**dadurch gekennzeichnet,**
**dass** die Prüfeinrichtung (11, 12) so ausgestaltet ist, dass eine Durchbiegung des Verbundwerkstücks (14) hervorgerufen und detektiert wird.

3. Anlage nach Anspruch 2,
**dadurch gekennzeichnet,**
**dass** die Prüfeinrichtung (12, 12) ein Mittel zum Aufbringen einer im Wesentlichen zentrisch auf das Verbundwerkstück (14) einwirkenden Kraft umfasst.

4. Anlage nach einem der Ansprüche 2 oder 3,
**dadurch gekennzeichnet,**
**dass** die Prüfeinrichtung (11, 12) Mittel zum nicht-flächigen Anheben des Verbundwerkstücks (14) umfasst.

5. Anlage nach Anspruch 4,
**dadurch gekennzeichnet,**
**dass** die Prüfeinrichtung mindestens eine mit einer vorbestimmten Kraft nach oben anhebbare Tastrolle (11) oder einen Tastgleiter umfasst.

6. Anlage nach Anspruch 5,
**dadurch gekennzeichnet,**
**dass** die Tastrolle (11) oder der Tastgleiter mit einer nach oben wirkenden Kraft beaufschlagbar ist, die kleiner als die Gewichtskraft des Verbundwerkstücks (14) ist, und dass eine Detektionseinrichtung (12) vorhanden ist, die erkennt, wenn die Tastrolle (11) oder der Tastgleiter sich nach oben bewegen, und ein entsprechendes Signal generiert.

7. Anlage nach mindestens einem der Ansprüche 2 bis 6,
**dadurch gekennzeichnet,**
**dass** die Prüfeinrichtung (11, 12) die Durchbiegung des Verbundwerkstücks (14) solcherart hervorruft, dass die Glasplatte bei der Durchbiegung gestreckt wird.

8. Anlage nach mindestens einem der Ansprüche 1 bis 7,
**dadurch gekennzeichnet,**
**dass** die Laminierpresse (1) und die Aushärtestation und/oder die Kühlstation (2) mehretagig ausgebildet sind.

9. Verfahren zum Herstellen von Verbundwerkstücken aus miteinander laminierten Schichten, von denen mindestens eine Schicht eine Glasplatte ist, wobei zunächst mindestens ein Verbundwerkstück in einer Laminierpresse unter Druck- und Wärmeeinwirkung laminiert wird, um den zum Laminieren verwendeten Adhäsivstoff zumindest zu aktivieren, und dann das Verbundwerkstück aus der Laminierpresse in eine Aushärtestation und/oder Kühlstation zum Aushärten und/oder Kühlen gefördert wird,
**dadurch gekennzeichnet,**
**dass** ein beim Ausfördern aus der Laminierpresse im Verbundwerkstück etwa vorhandener Glasbruch mittels einer Prüfung der Eigenstabilität des Verbundwerkstücks festgestellt wird.

10. Verfahren nach Anspruch 9,
**dadurch gekennzeichnet,**
**dass** die Eigenstabilität des Verbundwerkstücks geprüft wird, indem eine Durchbiegung des Verbundwerkstücks hervorgerufen und detektiert wird.

11. Verfahren nach Anspruch 10,
**dadurch gekennzeichnet,**
**dass** die Durchbiegung durch Ermittlung des Biegewiderstandes detektiert wird.

12. Verfahren nach einem der Ansprüche 10 oder 11,
**dadurch gekennzeichnet,**
**dass** das Verbundwerkstück mit einer im Wesentlichen zentrisch einwirkenden Kraft beaufschlagt und/oder nicht-flächig angehoben wird.

13. Verfahren nach Anspruch 12,
**dadurch gekennzeichnet,**
**dass** das Verbundwerkstück über eine Tastrolle oder einen Tastgleiter hinweg gefördert wird, wobei die Tastrolle oder der Tastgleiter mit einer nach oben wirkenden Kraft beaufschlagt wird, die kleiner als die Gewichtskraft des Verbundwerkstücks ist, und wobei eine Bewegung der Tastrolle oder des Tastgleiters nach oben detektiert wird.

14. Verfahren nach mindestens einem der Ansprüche 10 bis 13,
**dadurch gekennzeichnet,**
**dass** die Durchbiegung solcherart hervorgerufen wird, dass die Glasplatte gestreckt wird.

15. Verfahren nach mindestens einem der Ansprüche 9 bis 14,
**dadurch gekennzeichnet,**
**dass** Verbundwerkstücke, bei denen ein Glasbruch erkannt worden ist, zwischen der Laminierpresse und der Aushärtestation oder zwischen der Laminierpresse und der Kühlstation ausgeschleust werden.

16. Verfahren nach mindestens einem der Ansprüche 9 bis 15,
**dadurch gekennzeichnet,**
**dass** eine mehretagige Laminierpresse und eine mehretatige Aushärtestation und/oder Kühlstation verwendet werden.
